# EUROPÄISCHE PATENTSCHRIFT

(11) **EP 3 678 880 B1**
(45) Veröffentlichungstag und Bekanntmachung des Hinweises auf die Patenterteilung: **10.08.2022**
(21) Anmeldenummer: 18769304.9
(22) Anmeldetag: 04.09.2018
(51) Int. Cl.: B60J 7/11, B60R 11/00

(54) **VERFAHREN ZUR MONTAGE UND DEMONTAGE EINER TELEMATIKEINHEIT, TELEMATIKEINHEIT UND BAUGRUPPE EINES FAHRZEUGS**
METHOD FOR MOUNTING AND DISMOUNTING A TELEMATICS UNIT, TELEMATICS UNIT AND MODULE OF A VEHICLE
PROCÉDÉ DE MONTAGE ET DE DÉMONTAGE D'UNE UNITÉ TÉLÉMATIQUE, UNITÉ TÉLÉMATIQUE ET MODULE DE VÉHICULE

(30) Priorität: 04.09.2017 DE 102017120241
(43) Veröffentlichungstag der Anmeldung: 15.07.2020
(73) Patentinhaber: Peiker Acustic GmbH, 61381 Friedrichsdorf (DE)
(72) Erfinder: HINTZ, Torsten, 61381 Friedrichsdorf (DE); REICHERT, Walter, 61381 Friedrichsdorf (DE)
(74) Vertreter: Delaval, Guillaume Laurent
(86) Internationale Anmeldenummer: PCT/EP2018/073778
(87) Internationale Veröffentlichungsnummer: WO 2019/043267

(56) Entgegenhaltungen:
- WO-A1-2013/127388
- US-A- 3 913 971

## Beschreibung

### "Verfahren zur Montage und Demontage einer Telematikeinheit, Telematikeinheit und Baugruppe eines Fahrzeugs"

Die Erfindung betrifft ein Verfahren zur Montage und Demontage einer Telematikeinheit, eine Telematikeinheit sowie eine Baugruppe eines Fahrzeugs gemäß dem Oberbegriff des Anspruchs 1 bzw. 5 bzw. 12.

Aus der US3913971 ist ein Einsatz für ein Fahrzeugdach bekannt, welcher in einen Ausschnitt für ein Sonnendach passt. Die WO2013127388 offenbart eine Telematikeinheit umfassend eine Telematikbox zur Aufnahme und zum Anschluss von Komponenten für die Kommunikations- und Datenverbindung eines Fahrzeugs, wobei die Telematikeinheit die Telematikbox und einen Halterahmen umfasst, wobei der Halterahmen eine Öffnung umfasst, wobei die Telematikbox und der Halterahmen derart aufeinander angepasst sind, dass die Telematikbox im montierten Zustand in der Öffnung aufgenommen ist und mit dem Halterahmen verriegelt ist, so dass die Telematikbox von dem Halterahmen getragen und durch Entriegeln entnehmbar ist.

Der Erfindung liegt die Aufgabe zugrunde, ein Verfahren zur Montage und Demontage einer Telematikeinheit bzw. eine Telematikeinheit bzw. Baugruppe eines Fahrzeugs zu entwickeln, durch welche ein Montage- bzw. Demontagevorgang an einer Fahrzeugkarosserie erleichtert ist und das Risiko eines Diebstahls verringert ist.

Diese Aufgabe wird ausgehend von den Merkmalen des Oberbegriffs des Anspruchs 1 bzw. 5 bzw. 12 durch die kennzeichnenden Merkmale des Anspruchs 1 bzw. 5 bzw. 12 gelöst. In den jeweiligen Unteransprüchen sind vorteilhafte und zweckmäßige Weiterbildungen angegeben.

Das erfindungsgemäße Verfahren gemäß Anspruch 1 zur Montage und Demontage einer Telematikeinheit an einer Fahrzugskarosserie, insbesondere einem Fahrzeugdach sieht die nachfolgend genannten Schritte vor:
- zur Herstellung der Telematikeinheit, welche eine Telematikbox und einen Halterahmen umfasst, wird in einem Vormontageschritt die Telematikbox in eine Öffnung des Halterahmens eingesetzt und mit dem Halterahmen verriegelt,
- die aus dem Halterahmen und der Telematikbox gebildete Telematikeinheit wird zur Montage von außen in eine auf den Halterahmen angepasste Aussparung der Fahrzeugkarosserie eingesetzt und mit der Fahrzeugkarosserie verriegelt,
- die Telematikbox wird zur Demontage aus einem Innenraum der Fahrzeugkarosserie heraus von dem Halterahmen entriegelt und aus dem Halterahmen in den Innenraum entnommen. Trotz einer späteren Demontierbarkeit der Telematikbox aus einem Innenraum des Fahrzeugs heraus, ist eine Montage der Telematikeinheit von außen möglich. Hierdurch wird die Montage erleichtert, da diese ausschließlich von außen erfolgen kann, ohne dass auf die beengten Platzverhältnisse in einem Innenraum des Fahrzeugs Rücksicht genommen werden muss. Weiterhin wird auch die Demontage erleichtert, da diese im Servicefall aus dem Innenraum erfolgen kann, so dass diese an einem Ort erfolgt, an dem auch auf die Kabelzuführung zugegriffen werden kann, so dass es vermieden ist, dass der Werker von innen und von außen an der Fahrzeugkarosserie arbeiten muss. Entsprechend ist hierdurch auch einem Diebstahl vorgebeugt, da ein Abtrennen der Telematikbox von dem Halterrahmen nur derart möglich ist, dass die Telematikbox in den Innenraum des Fahrzeugs entnommen wird.

Es ist auch vorgesehen, dass der Halterahmen der Telematikeinheit derart mit der Fahrzeugkarosserie verriegelt wird, dass dieser allenfalls mittels eines Werkzeugs wieder von der Fahrzeugkarosserie trennbar ist. Insbesondere ist eine Verbindung des Halterahmens mit der Fahrzeugkarosserie durch Schnapphaken und Spreiznieten vorgesehen. Hierdurch ist der Halterahmen diebstahlsicher mit der Fahrzeugkarosserie verbunden.

Es ist auch vorgesehen, dass die Demontage der Telematikbox derart erfolgt, dass eine Verriegelung der Telematikbox an dem Halterahmen zunächst von Hand und werkzeugloses gelöst wird, wobei ein Kraftvektor einer zum Entriegeln ausgeübten Kraft parallel zu einer durch die Fahrzeugkarosserie im Bereich der Aussparung definierten Ebene ausgerichtet ist, wobei die Telematikbox insbesondere durch eine Schiebebewegung oder durch eine Klappbewegung entriegelt wird. Hierdurch wird bei einer Demontage eine Beschädigung der Fahrzeugkarosserie und insbesondere des Fahrzeugdachs vermieden, da zur Demontage keine Querkräfte aufgebracht werden müssen, durch welche eine Gefahr besteht, dass die Fahrzeugkarosserie geknickt wird und eine dauerhaft sichtbare Beschädigung erfährt. Auch eine erneute Montage der Telematikbox kann von innen erfolgen, ohne dass die Gefahr einer Beschädigung der Fahrzeugkarosserie durch eine zur Montage erforderliche Kraftausübung besteht.

Es ist auch vorgesehen, dass die Telematikbox nach dem Entriegeln gegenüber dem Halterahmen zunächst derart verkippt wird, dass die Telematikbox während der Kippbewegung mit einer einem Entriegelungsmittel gegenüberliegenden Kante in Anlage an dem Halterahmen bleibt. Hierdurch ist eine einseitig erfolgende Entriegelung ausreichend, um die Telematikbox in den Innenraum des Fahrzeugs zu entnehmen. Dies erleichtert den Entriegelungsvorgang für den Werker erheblich und ermöglicht es auch, die Entriegelung und die Entnahme mit einer Hand auszuführen.

Die erfindungsgemäße Telematikeinheit gemäß Anspruch 5, welche eine Telematikbox zur Aufnahme und zum Anschluss von Komponenten für die Kommunikations- und Datenverbindung eines Fahrzeugs umfasst, umfasst neben der Telematikbox auch einen Halterahmen, wobei der Halterahmen eine Öffnung umfasst, wobei die Telematikbox und der Halterahmen derart aufeinander angepasst sind, dass die Telematikbox im montierten Zustand in der Öffnung aufgenommen ist und mit dem Halterahmen verriegelt ist, so dass die Telematikbox von dem Halterahmen getragen und durch Entriegeln entnehmbar ist. Eine derartige, als Telematikeinheit bezeichnete Einheit ermöglicht es, die Telematikbox und den Halterahmen in einem Montageschritt mit der Fahrzeugkarosserie zu verbinden bzw. in eine in der Fahrzeugkarosserie ausgebildete Aussparung einzusetzen. Weiterhin ist es vorgesehen, den Halterahmen als umlaufend geschlossenen Halterahmen auszubilden. Durch einen derartigen Halterahmen lässt sich sowohl eine belastbare und sichere Verbindung zwischen dem Halterahmen und der Fahrzeugkarosserie als auch zwischen dem Halterahmen und der Telematikbox herstellen.

Es ist auch vorgesehen, dass der Halterahmen zu seiner Öffnung hin wenigstens zwei Kupplungsmittel umfasst, dass die Telematikbox zwischen einer Oberseite und einer Unterseite wenigstens zwei Gegenkupplungsmittel umfasst, wobei die Telematikbox im montierten Zustand derart in der Öffnung des Halterahmens sitzt, dass die einzelnen Kupplungsmittel und die einzelnen Gegenkupplungsmittel Kupplungspaare bilden, durch welche die Telematikbox in dem Halterahmen unverlierbar fixiert ist. Hierdurch ist eine zuverlässige Halterung der Telematikbox in dem Halterahmen gewährleistet und gleichzeitig die Voraussetzung geschaffen, dass die Telematikbox mit einem einfachen Handgriff von dem Halterahmen gelöst werden kann.

Es ist auch vorgesehen, dass der Halterahmen an einer von seiner Öffnung weg weisenden Außenseite wenigstens zwei Klemmmittel umfasst, wobei der Halterahmen im montierten Zustand in einer Aussparung einer Fahrzeugkarosserie formschlüssig befestigt ist. Hierbei sind die Klemmmittel vorzugsweise als Schnapphaken und/oder Spreiznieten ausgebildet. Durch eine derartige Befestigung des Halterrahmens lässt sich dieser einfach und schnell durch Eindrücken montieren. Weiterhin ist hierdurch bei entsprechender Ausbildung bzw. Anordnung der Klemmmittel eine Demontage des Halterahmens von außen erschwert oder unmöglich, so dass auch einem Diebstahl vorgebeugt ist.

Weiterhin ist es vorgesehen, dass die Telematikbox wenigstens ein Entriegelungsmittel umfasst, wobei mittels des Entriegelungsmittels durch eine Linearbewegung oder eine Schwenkbewegung eines der Kupplungsmittel oder eines der Gegenkupplungsmittel derart bewegbar ist, dass eine durch eines der Kupplungspaare ausgebildete Verbindung gelöst ist. Auf diese Weise ist einem Werker von dem Innenraum des Fahrzeugs aus eine rasche und schonende Entriegelung bzw. Demontage der Telematikbox aus dem Halterahmen möglich.

Es ist auch vorgesehen, dass das Entriegelungsmittel durch eines der Gegenkupplungsmittel oder durch eines der Kupplungsmittel gebildet ist und dass das Entriegelungsmittel insbesondere als Hebel ausgebildet ist, wobei der Hebel vorzugsweise um eine Schwenkachse schwenkbar ist. Auf diese Weise ist einem Werker von dem Innenraum des Fahrzeugs aus eine rasche und schonende Entriegelung bzw. Demontage der Telematikbox aus dem Halterahmen möglich.

Alternativ ist es auch vorgesehen, dass das Entriegelungsmittel als Betätigungsmittel, insbesondere Hebel ausgebildet ist, durch welches das Gegenkupplungsmittel oder das Kupplungsmittel bewegbar ist und dass das Betätigungsmittel insbesondere um eine Schwenkachse schwenkbar ist. Auf diese Weise ist einem Werker von dem Innenraum des Fahrzeugs aus eine rasche und schonende Entriegelung bzw. Demontage der Telematikbox aus dem Halterahmen möglich.

Bei der erfindungsgemäßen Baugruppe eines Fahrzeugs gemäß Anspruch 12, welche eine Fahrzeugkarosserie mit einer Aussparung und eine Telematikbox umfasst, ist es vorgesehen, dass die Baugruppe einen Halterahmen umfasst, dass der Halterahmen derart auf die Aussparung in der Fahrzeugkarosserie angepasst ist, dass der Halterahmen im montierten Zustand in der Aussparung aufgenommen ist und mit der Fahrzeugkarosserie verriegelt ist, so dass der Halterahmen von der Fahrzeugkarosserie getragen ist und dass der Halterahmen und Telematikbox derart aufeinander angepasst sind, dass die Telematikbox im montierten Zustand in einer Öffnung des Halterahmens aufgenommen ist und mit dem Halterahmen lösbar verriegelt ist, so dass die Telematikbox von dem Halterahmen getragen ist und aus dem Halterahmen durch Entriegeln herausnehmbar ist. Durch eine derartige Baugruppe wird die Montage erleichtert, da diese ausschließlich von außen erfolgen kann, ohne dass auf die beengten Platzverhältnisse in einem Innenraum des Fahrzeugs Rücksicht genommen werden muss. Weiterhin wird auch die Demontage erleichtert, da diese im Servicefall aus dem Innenraum erfolgen kann, so dass diese an einem Ort erfolgt, an dem auch auf die Kabelzuführung zugegriffen werden kann, so dass es vermieden ist, dass der Werker von innen und von außen arbeiten muss. Entsprechend ist hierdurch auch einem Diebstahl vorgebeugt, da nur ein Abtrennen der Telematikbox von dem Halterrahmen nur derart möglich ist, dass die Telematikbox in den Innenraum des Fahrzeugs entnommen wird.

Unter einer Telematikbox wird im Sinne der Erfindung eine Baueinheit verstanden, welche Komponenten der Kommunikationstechnik und der Informatik in sich vereint und welche an weitere Komponenten der Kommunikationstechnik und der Informatik wie wahlweise z.B. aktive Antennen und/oder passive Antennen und/oder Verstärker und/oder Endgeräte drahtgebunden und/oder drahtlos anschließbar ist.

Weitere Einzelheiten der Erfindung werden in der Zeichnung anhand von schematisch dargestellten Ausführungsbeispielen beschrieben.

Hierbei zeigt:
- Figur 1:: eine perspektivische Ansicht einer Fahrzeugkarosserie und einer Telematikeinheit;
- Figur 2:: einen Querschnitt durch die Darstellung der Figur 1 entsprechend der Schnittlinie II-II;
- Figur 3:: eine perspektivische Ansicht der in der Fahrzeugkarosserie montierten Telematikeinheit, wobei die Telematikbox schon beim Vorgang der Demontage gezeigt ist;
- Figur 4:: eine Unteransicht der Telematikeinheit;
- Figur 5:: eine Detailansicht zu der Figur 4;
- Figur 6:: eine perspektivische Ansicht einer zweiten Telematikeinheit in einer geschlossenen Stellung einer Schiebeverriegelung und
- Figur 7:: eine weitere perspektivische Ansicht der zweiten Telematikeinheit, wobei die Schiebeverriegelung in einer offenen Stellung steht.

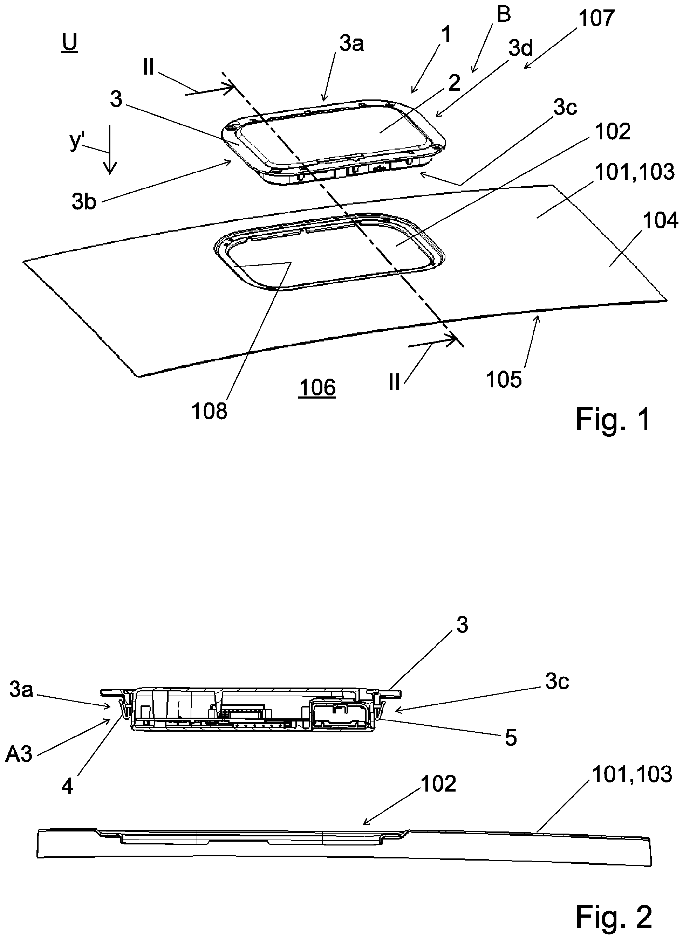

In der Figur 1 eine perspektivische Ansicht einer Fahrzeugkarosserie 101 und einer Telematikeinheit 1 gezeigt. Die Fahrzeugkarosserie 101 umfasst eine Aussparung 102, in welche die Telematikeinheit 1 einsetzbar ist, wobei die Fahrzeugkarosserie 101 als Fahrzeugdach 103 ausgebildet ist. In der perspektivischen Ansicht ist eine Außenseite 104 der Fahrzeugkarosserie 101 bzw. des Fahrzeugdachs 103 sichtbar. Eine Unterseite 105 der Fahrzeugkarosserie 101 bzw. des Fahrzeugdachs 103 liegt der Außenseite 104 gegenüber und weist zu einem nicht näher dargestellten Innenraum 106 eines nicht näher dargestellten Fahrzeugs 107, zu welchem die Fahrzeugkarosserie 101 gehört.

Die Telematikeinheit 1 ist dafür vorgesehen, in eine Pfeilrichtung y' aus einer das Fahrzeug 107 umgebenden Umgebung U in die Aussparung 102 eingesetzt zu werden. Die Telematikeinheit 1 umfasst eine Telematikbox 2 und einen Halterahmen 3, wobei der Halterahmen 3 die Telematikbox 2 ringartig umgibt. Die Telematikbox 2 ist in dem Halterahmen 3 fixiert, so dass diese bei einer Handhabung des Halterrahmens 3 ihre Ausrichtung zu dem Halterahmen 3 beibehält.

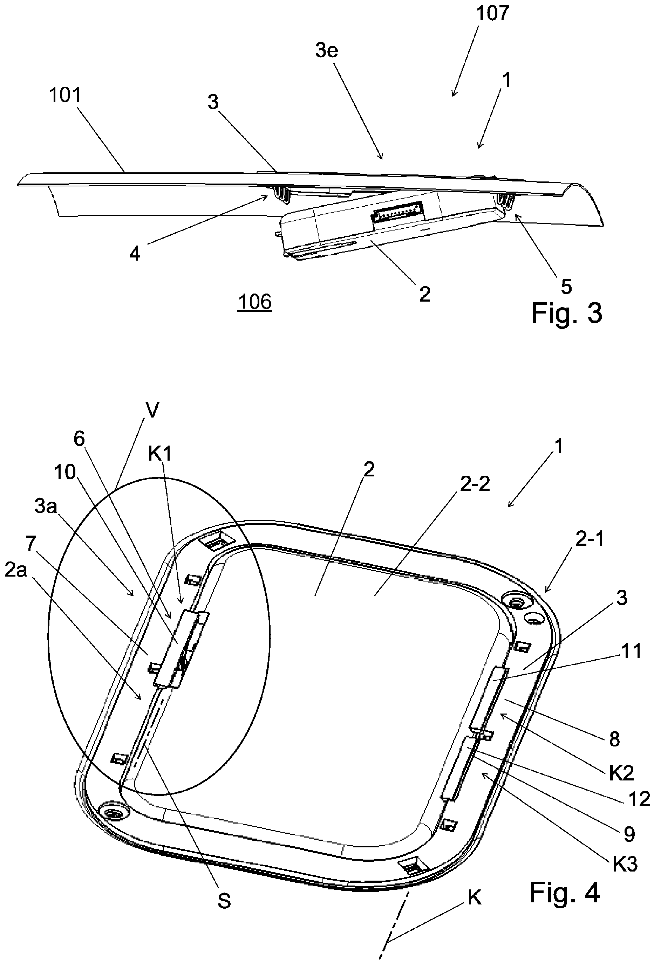

In der Figur 2 ist die Darstellung der Figur 1 im Schnitt entsprechend der Schnittlinie II-II gezeigt. In dieser Ansicht ist erkennbar, dass der Halterahmen 3 an gegenüberliegenden Querseiten 3a, 3c (siehe auch Figur 1) Klemmmittel 4, 5 umfasst, welche bei einem Eindrücken der Telematikeinheit 1 in die Aussparung 102 der Fahrzeugkarosserie 101 mit einem die Aussparung 102 umlaufenden Steg 108 (siehe Figur 1) verrasten, so dass die Telematikeinheit 1 an der Fahrzeugkarosserie 101 fixiert ist und von dieser nur gelöst werden kann, wenn die Klemmmittel 4, 5 mittels eines Werkzeugs betätigt werden. Hierbei ist es vorgesehen, dass - um eine ungewünschte Demontage zu verhindern - die Klemmmittel 4, 5 nur aus dem Innenraum 106 des Fahrzeugs 107 heraus betätigbar sind. Die Querseiten 3a, 3c und Längsseiten 3b, 3d (siehe Figur 1) bilden eine umlaufende Außenseite A3 des Halterahmens 3, welche von einer Öffnung 3e des Halterahmens 3 (siehe Figur 3) weg weist, wobei in der Öffnung 3e die Telematikbox 2 aufgenommen ist.

Das Zusammenfügen der Telematikbox 2 und des Halterahmens 3 erfolgt in einem Vormontageschritt, so dass im gezeigten Montageschritt nur noch die Telematikeinheit 1 als Einheit verbaut werden muss.

In der Figur 3 ist in einer weiteren perspektivischen Ansicht gezeigt wie die Telematikeinheit 1 in der Fahrzeugkarosserie 101 fixiert ist, wobei in dieser Darstellung bereits auch schon gezeigt ist, wie die Telematikbox 2 von dem Halterahmen 3 bereits teilweise entriegelt ist und zur vollständigen Demontage in den Innenraum 106 des Fahrzeugs 107 geschwenkt wird.

In der Figur 4 ist eine Unteransicht der Telematikeinheit 1 gezeigt, wobei die Telematikeinheit 1 hier auf Grund der gewählten Perspektive quadratisch erscheint. Zur Vereinfachung wurde auf eine Darstellung der Fahrzeugkarosserie und der Klemmmittel verzichtet. An einer parallel zu der Querseite 3a des Halterahmens 3 verlaufenden Querseite 2a der Telematikbox 2 ist eine Verriegelung 6 angeordnet. Diese Verriegelung 6 ist in der Figur 4 verschlossen dargestellt.

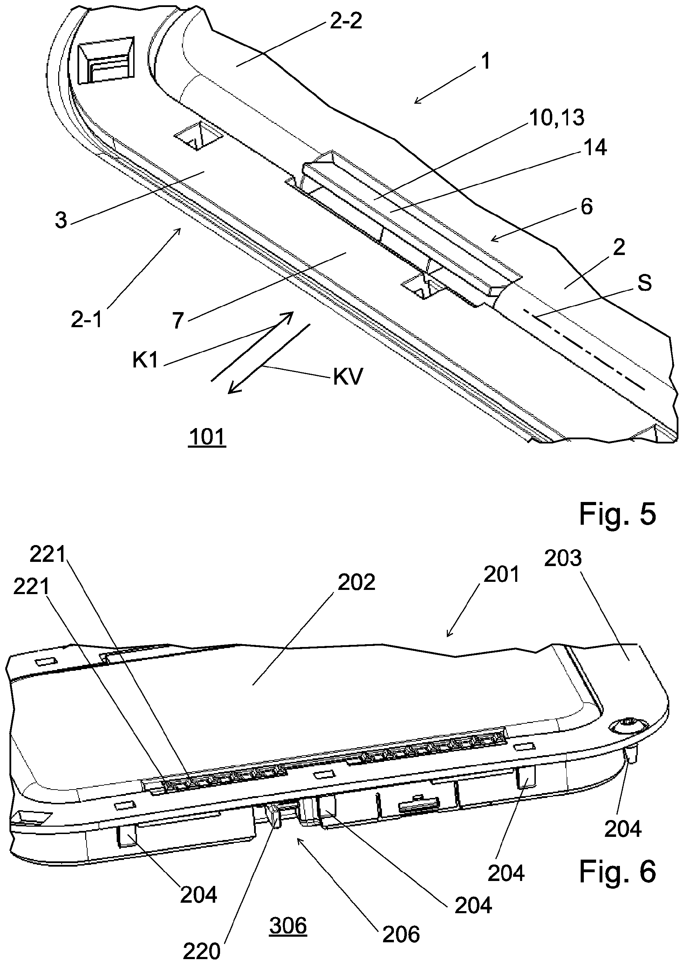

In der Figur 5, welche eine vergrößerte Ansicht auf einen Ausschnitt V der Telematikbox 1 zeigt, ist die Verriegelung 6 geöffnet dargestellt. Zur Bildung der Verriegelung 6 umfasst der Halterahmen 3 Kupplungsmittel 7, 8 und 9 (siehe auch Figur 4) und umfasst die Telematikbox 2 zwischen einer Oberseite 2-1 und einer Unterseite 2-2 Gegenkupplungsmittel 10, 11 und 12 (siehe auch Figur 4). Die Kupplungsmittel 7, 8, 9 und die Gegenkupplungsmittel 10, 11, 12 bilden Kupplungspaare K1, K2, K3. Das Gegenkupplungsmittel 10 ist als Entriegelungsmittel 13 ausgebildet und bildet einen Hebel 14, welcher um eine Schwenkachs S schwenkbar ist und beim Schwenken von dem Kupplungsmittel 7 entriegelt wird, so dass die Telematikbox 2 wie in der Figur 3 gezeigt um eine durch die Kupplungsmittel 8, 9 und die Gegenkupplungsmittel 11, 12 gebildete Klappachse K (siehe Figur 4) nach unten, in den Innenraum 106 des Fahrzeugs 107 klappbar ist, um dann von den Kupplungsmitteln 8, 9 abgenommen werden zu können. Aus dem Innenraum 106 des Fahrzeugs 107 heraus kann dann die Telematikbox 2 in zur vorstehenden Beschreibung umgekehrter Weise wieder in dem Halterahmen 3 fixiert werden. Ein Kraftvektor KV einer beim Schwenken des Hebels 14 um die Schwenkachse S erzeugten Kraft ist parallel zu einer durch die Fahrzeugkarosserie 101 im Bereich der Aussparung definierten Ebene ausgerichtet.

Durch die Telematikbox 2, den Halterahmen 3 und die Fahrzeugkarosserie 101 wird eine Baugruppe B des Fahrzeugs 107 gebildet (siehe Figur 1).

In der Figur 6 ist eine perspektivische Ansicht einer zweiten Telematikeinheit 201 dargestellt. Die Telematikeinheit 201 umfasst ebenfalls eine Telematikbox 202, welche in einem Halterahmen 203 aufgenommen ist, wobei eine Fahrzeugkarosserie, an welcher der Halterahmen 203 fixiert ist, nicht dargestellt ist. An dem Halterrahmen 203 sind Klemmmittel 204 erkennbar, welche als Schnapphaken bzw. Spreizniet ausgebildet sind und zur Befestigung an der nicht dargestellten Fahrzeugkarosserie dienen.

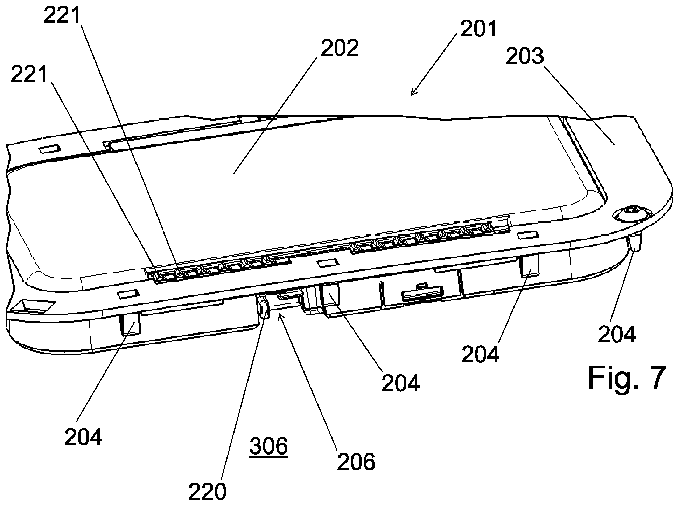

Aus einem Innenraum 306 heraus ist eine Verriegelung 206 erkennbar, welche über einen Schieber 220 betätigbar ist. Die Verriegelung 206 umfasst exemplarisch bezeichnete Zähne 221, welche von dem Schieber 220 durch ein nach links Schieben des Schiebers 220 aus einer in der Figur 6 gezeigten geschlossenen Stellung in eine in der Figur 7 gezeigte offene Stellung verschoben werden. Hierbei greifen die an der Telematikbox 202 geführten Zähne 221 in der in der Figur 6 gezeigten Stellung derart in den Halterahmen 203 ein, dass die Telematikbox 202 an dem Halterahmen 203 fixiert ist, wobei die Telematikbox 202 gegenüberliegend zu der Verriegelung 206 analog zu der ersten Ausführungsvariante mit dem Halterahmen 203 verbunden ist, so dass diese aus der in der Figur 7 gezeigten geöffneten Stellung heraus nach unten in den Innenraum 306 geschwenkt und abgenommen werden kann.

### Bezugszeichenliste:

- 1: Telematikeinheit
- 2: Telematikbox
- 2a: Querseite von 2
- 2-1: Oberseite von 2
- 2-2: Unterseite von 2
- 3: Halterahmen
- 3a, 3c: Querseite von 3
- 3b, 3d: Längsseite von 3
- 3e: Öffnung von 3 zur Aufnahme von 2
- 4, 5: Klemmmittel von 3
- 6: Verriegelung von 2 an 3
- 7, 8, 9: Kupplungsmittel
- 10, 11, 12: Gegenkupplungsmittel
- 13: Entriegelungsmittel
- 14: Hebel

- A3: Außenseite von 3
- B: Baugruppe
- K: Klappachse
- K1 - K3: Kupplungspaare
- KV: Kraftvektor
- S: Schwenkachse von 14
- U: Umgebung
- y': Pfeilrichtung
- 101: Fahrzeugkarosserie
- 102: Aussparung
- 103: Fahrzeugdach
- 104: Außenseite
- 105: Unterseite
- 106: Innenraum
- 107: Fahrzeug

- 201: Telematikeinheit
- 202: Telematikbox
- 203: Halterahmen
- 206: Verriegelung
- 220: Schieber
- 221: Zahn

- 306: Innenraum

## Patentansprüche

1. Verfahren zur Montage und Demontage einer Telematikeinheit (1; 201) an einer Fahrzeugkarosserie (101),
- wobei die Telematikeinheit (1; 201) eine Telematikbox (2; 202) und einen Halterahmen (3; 203) umfasst,
- wobei die Telematikbox (2; 202) in einem Vormontageschritt in eine Öffnung (3e) des Halterahmens (3; 203) eingesetzt wird und mit dem Halterahmen (3; 203) verriegelt wird,
- wobei die aus dem Halterahmen (3; 203) und der Telematikbox (2; 202) gebildete Telematikeinheit (1; 201) zur Montage von außen in eine auf den Halterahmen (3; 203) angepasste Aussparung (102) der Fahrzeugkarosserie (101) eingesetzt wird und mit der Fahrzeugkarosserie (101) verriegelt wird,
- wobei die Telematikbox (2; 202) zur Demontage aus einem Innenraum (106; 306) der Fahrzeugkarosserie (101) heraus von dem Halterahmen (3; 203) entriegelt wird und aus dem Halterahmen (3; 203) in den Innenraum (106; 306) entnommen wird.

2. Verfahren nach Anspruch 1, **dadurch gekennzeichnet, dass** der Halterahmen (3; 203) der Telematikeinheit (1; 201) derart mit der Fahrzeugkarosserie (101) verriegelt wird, dass dieser allenfalls mittels eines Werkzeugs wieder von der Fahrzeugkarosserie (101) trennbar ist.

3. Verfahren nach wenigstens einem der vorhergehenden Ansprüche, **dadurch gekennzeichnet, dass** die Demontage der Telematikbox (2; 202) derart erfolgt, dass eine Verriegelung (6; 206) der Telematikbox (2; 202) an dem Halterahmen (3; 203) zunächst von Hand und werkzeuglos gelöst wird, wobei ein Kraftvektor (KV) einer zum Entriegeln ausgeübten Kraft parallel zu einer durch die Fahrzeugkarosserie (101) im Bereich der Aussparung (102) definierten Ebene ausgerichtet ist, wobei die Telematikbox (2; 202) insbesondere durch eine Schiebebewegung oder durch eine Klappbewegung entriegelt wird.

4. Verfahren nach Anspruch 3, **dadurch gekennzeichnet, dass** die Telematikbox (2; 202) nach dem Entriegeln gegenüber dem Halterahmen (3; 203) zunächst derart verkippt wird, dass die Telematikbox (2; 202) während der Kippbewegung mit einer einem Entriegelungsmittel (13) gegenüberliegenden Kante in Anlage an dem Halterahmen (3; 203) bleibt.

5. Telematikeinheit (1; 201) umfassend eine Telematikbox (2; 202) zur Aufnahme und zum Anschluss von Komponenten für die Kommunikations- und Datenverbindung eines Fahrzeugs (107), **dadurch gekennzeichnet, dass** die Telematikeinheit (1; 201) die Telematikbox (2; 202) und einen Halterahmen (3; 203) umfasst, wobei der Halterahmen (3; 203) eine Öffnung (3e) umfasst, wobei die aus dem Halterahmen und der Telematikbox gebildete Telematikeinheit derart angepasst ist zur Montage von außen in eine auf den Halterahmen angepasste Aussparung der Fahrzeugkarosserie eingesetzt wird und mit der Fahrzeugkarosserie verriegelt wird, wobei die Telematikbox (2; 202) und der Halterahmen (3; 203) derart aufeinander angepasst sind, dass die Telematikbox (2; 202) im montierten Zustand in der Öffnung (3e) aufgenommen ist und mit dem Halterahmen (3; 203) verriegelt ist, so dass die Telematikbox (2; 202) von dem Halterahmen (3; 203) getragen und durch Entriegeln entnehmbar ist, wobei die Telematikbox (2; 202) zur Demontage aus einem Innenraum (106; 306) der Fahrzeugkarosserie (101) zum Entriegeln aus dem Halterahmen (3; 203) geeignet ist und aus dem Halterahmen (3; 203) in den Innenraum (106; 306) entnommen.

6. Telematikeinheit nach Anspruch 5, **dadurch gekennzeichnet, dass** der Halterahmen (3; 203) als umlaufend geschlossener Halterahmen (3; 203) ausgebildet ist.

7. Telematikeinheit nach Anspruch 6, **dadurch gekennzeichnet, dass** der Halterahmen (3; 203) zu seiner Öffnung (3e) hin wenigstens zwei Kupplungsmittel (7, 8, 9) umfasst, dass die Telematikbox (2; 202) zwischen einer Oberseite (2-1) und einer Unterseite (2-2) wenigstens zwei Gegenkupplungsmittel (10, 11, 12) umfasst, wobei die Telematikbox (2; 202) im montierten Zustand derart in der Öffnung (3e) des Halterahmens (3; 203) sitzt, dass die einzelnen Kupplungsmittel (7, 8, 9) und die einzelnen Gegenkupplungsmittel (10, 11, 12) Kupplungspaare (K1, K2, K3) bilden, durch welche die Telematikbox (2; 202) in dem Halterahmen (3; 203) unverlierbar fixiert ist.

8. Telematikeinheit nach Anspruch 6, **dadurch gekennzeichnet, dass** der Halterahmen (3; 203) an einer von seiner Öffnung (3e) weg weisenden Außenseite (A3) wenigstens zwei Klemmmittel (4, 5) umfasst, wobei der Halterahmen (3; 203) im montierten Zustand in einer Aussparung (102) einer Fahrzeugkarosserie (101) formschlüssig befestigt ist.

9. Telematikeinheit nach Anspruch 7, **dadurch gekennzeichnet, dass** die Telematikbox (2; 202) wenigstens ein Entriegelungsmittel (13) umfasst, wobei mittels des Entriegelungsmittels (13) durch eine Linearbewegung oder eine Schwenkbewegung eines der Kupplungsmittel (7, 8, 9) oder eines der Gegenkupplungsmittel (10, 11, 12) derart bewegbar ist, dass eine durch eines der Kupplungspaare (K1, K2, K3) ausgebildete Verbindung gelöst ist.

10. Telematikeinheit nach Anspruch 9, **dadurch gekennzeichnet, dass** das Entriegelungsmittel (13) durch eines der Gegenkupplungsmittel (10, 11, 12) oder durch eines der Kupplungsmittel (7, 8, 9) gebildet ist und dass das Entriegelungsmittel (13) insbesondere als Hebel (14) ausgebildet ist, wobei der Hebel (14) vorzugsweise um eine Schwenkachse (S) schwenkbar ist.

11. Telematikeinheit nach Anspruch 9, **dadurch gekennzeichnet, dass** das Entriegelungsmittel (13) als Betätigungsmittel, insbesondere Hebel (14) ausgebildet ist, durch welches das Gegenkupplungsmittel (10, 11, 12) oder das Kupplungsmittel (7, 8, 9) bewegbar ist und dass das Betätigungsmittel insbesondere um eine Schwenkachse (S) schwenkbar ist.

12. Baugruppe (B) eines Fahrzeugs (107), wobei die Baugruppe (B) eine Fahrzeugkarosserie (101) mit einer Aussparung (102) und eine Telematikbox (2; 202) umfasst, **dadurch gekennzeichnet,**
- **dass** die Baugruppe (B) einen Halterahmen (3; 203) umfasst,
- **dass** der Halterahmen (3; 203) derart auf die Aussparung (102) in der Fahrzeugkarosserie (101) angepasst ist, dass der Halterahmen (3; 203) im montierten Zustand in der Aussparung (102) aufgenommen ist und mit der Fahrzeugkarosserie (101) verriegelt ist, so dass der Halterahmen (3; 203) von der Fahrzeugkarosserie (101) getragen ist,
- **dass** die aus dem Halterahmen (3; 203) und der Telematikbox (2; 202) gebildete Telematikeinheit derart angepasst ist zur Montage von außen in eine auf den Halterahmen angepasste Aussparung der Fahrzeugkarosserie eingesetzt wird und mit der Fahrzeugkarosserie verriegelt wird,
- **dass** der Halterahmen (3; 203) und die Telematikbox (2; 202) derart aufeinander angepasst sind, dass die Telematikbox (2; 202) im montierten Zustand in einer Öffnung (3e) des Halterahmens (3; 203) aufgenommen ist und mit dem Halterahmen (3; 203) lösbar verriegelt ist, so dass die Telematikbox (2; 202) von dem Halterahmen (3; 203) getragen ist und aus dem Halterahmen (3; 203) durch Entriegeln herausnehmbar ist, und
- **dass** die Telematikbox (2; 202) zur Demontage aus einem Innenraum (106; 306) der Fahrzeugkarosserie (101) zum Entriegeln aus dem Halterahmen (3; 203) geeignet ist und aus dem Halterahmen (3; 203) in den Innenraum (106; 306) entnommen.

## Claims

1. Method for mounting and dismounting a telematics unit (1; 201) on a vehicle body (101),
- wherein the telematics unit (1; 201) comprises a telematics box (2; 202) and a holding frame (3; 203),
- wherein the telematics box (2; 202) is inserted into an opening (3e) of the holding frame (3; 203) in a pre-mounting step, and is locked to the holding frame (3; 203),
- wherein, for mounting from outside, the telematics unit (1; 201) formed from the holding frame (3; 203) and the telematics box (2; 202) is inserted into a cut-out (102) of the vehicle body (101) that is matched to the holding frame (3; 203), and is locked to the vehicle body (101),
- wherein, for dismounting from an interior (106; 306) of the vehicle body (101), the telematics box (2; 202) is unlocked from the holding frame (3; 203) and is removed from the holding frame (3; 203) into the interior (106; 306).

2. Method according to Claim 1, **characterized in that** the holding frame (3; 203) of the telematics unit (1; 201) is locked to the vehicle body (101) in such a way that the holding frame can be separated from the vehicle body (101) again only by means of a tool.

3. Method according to at least one of the preceding claims, **characterized in that** the dismounting of the telematics box (2; 202) is carried out in such a way that locking (6; 206) of the telematics box (2; 202) to the holding frame (3; 203) is firstly released by hand and without any tools, wherein a force vector (KV) of a force exerted for the unlocking is oriented parallel to a plane defined by the vehicle body (101) in the area of the cut-out (102), wherein the telematics box (2; 202) is in particular unlocked by a sliding movement or by a folding movement.

4. Method according to Claim 3, **characterized in that**, following the unlocking, the telematics box (2; 202) is firstly tilted with respect to the holding frame (3; 203) in such a way that, during the tilting movement, the telematics box (2; 202) remains in contact with the holding frame (3; 203) with an edge located opposite an unlocking means (13).

5. Telematics unit (1; 201) comprising a telematics box (2; 202) for the accommodation and for the connection of components for the communication and data link of a vehicle (107), **characterized in that** the telematics unit (1; 201) comprises the telematics box (2; 202) and a holding frame (3; 203), wherein the holding frame (3; 203) comprises an opening (3e), wherein the telematics unit formed from the telematics box and the holding frame is adapted to be mounted from outside in such a way as to be inserted into a cut-out of the vehicle body that is matched to the holding frame, and is locked to the vehicle body, wherein the telematics box (2; 202) and the holding frame (3; 203) are matched to each other in such a way that, in the mounted state, the telematics box (2; 202) is accommodated in the opening (3e) and is locked to the holding frame (3; 203), so that the telematics box (2; 202) is carried by the holding frame (3; 203) and is removable by unlocking, wherein, for dismounting from an interior (106; 306) of the vehicle body (101), the telematics box (2; 202) is suitable to be unlocked from the holding frame (3; 203) and removed from the holding frame (3; 203) into the interior (106; 306).

6. Telematics unit according to Claim 5, **characterized in that** the holding frame (3; 203) is formed as a circumferentially closed holding frame (3; 203).

7. Telematics unit according to Claim 6, **characterized in that** the holding frame (3; 203) comprises at least two coupling means (7, 8, 9) for its opening (3e), **in that** the telematics box (2; 202) comprises at least two mating coupling means (10, 11, 12) between an upper side (2-1) and an underside (2-2), wherein, in the mounted state, the telematics box (2; 202) sits in the opening (3e) of the holding frame (3; 203) in such a way that the individual coupling means (7, 8, 9) and the individual mating coupling means (10, 11, 12) form coupling pairs (K1, K2, K3), by means of which the telematics box (2; 202) is captively fixed in the holding frame (3; 203).

8. Telematics unit according to Claim 6, **characterized in that** the holding frame (3; 203) comprises at least two clamping means (4, 5) on an outer side (A3) pointing away from its opening (3e), wherein, in the mounted state, the holding frame (3; 203) is fixed by a form fit in a cut-out (102) in a vehicle body (101).

9. Telematics unit according to Claim 7, **characterized in that** the telematics box (2; 202) comprises at least one unlocking means (13), wherein, by means of the unlocking means (13), one of the coupling means (7, 8, 9) or one of the mating coupling means (10, 11, 12) can be moved by means of a linear movement or a pivoting movement in such a way that a connection formed by one of the coupling pairs (K1, K2, K3) is released.

10. Telematics unit according to Claim 9, **characterized in that** the unlocking means (13) is formed by one of the mating coupling means (10, 11, 12) or by one of the coupling means (7, 8, 9), and **in that** the unlocking means (13) is formed in particular as a lever (14), wherein the lever (14) is preferably pivotable about a pivot axis (S) .

11. Telematics unit according to Claim 9, **characterized in that** the unlocking means (13) is formed as an actuating means, in particular a lever (14), by means of which the mating coupling means (10, 11, 12) or the coupling means (7, 8, 9) can be moved, and **in that** the actuating means is in particular pivotable about a pivot axis (S).

12. Module (B) of a vehicle (107), wherein the module (B) comprises a vehicle body (101) having a cut-out (102) and a telematics box (2; 202), **characterized**
- **in that** the module (B) comprises a holding frame (3; 203),
- **in that** the holding frame (3; 203) is matched to the cut-out (102) in the vehicle body (101) in such a way that, in the mounted state, the holding frame (3; 203) is accommodated in the cut-out (102) and is locked to the vehicle body (101), so that the holding frame (3; 203) is carried by the vehicle body (101),
- **in that** the telematics unit formed from the holding frame (3; 203) and the telematics box (2; 202) is adapted to be mounted from outside in such a way as to be inserted into a cut-out of the vehicle body that is matched to the holding frame, and is locked to the vehicle body,
- **in that** the holding frame (3; 203) and the telematics box (2; 202) are matched to each other in such a way that, in the mounted state, the telematics box (2; 202) is accommodated in an opening (3e) of the holding frame (3; 203) and is detachably locked to the holding frame (3; 203), so that the telematics box (2; 202) is carried by the holding frame (3; 203) and is removable from the holding frame (3; 203) by unlocking, and
- **in that**, for dismounting from an interior (106; 306) of the vehicle body (101), the telematics box (2; 202) is suitable to be unlocked from the holding frame (3; 203) and removed from the holding frame (3; 203) into the interior (106; 306).

## Revendications

1. Procédé de montage et de démontage d'une unité télématique (1 ; 201) sur une carrosserie de véhicule (101),
- l'unité télématique (1; 201) comprenant un boîtier télématique (2 ; 202) et un cadre de support (3; 203),
- le boîtier télématique (2 ; 202) étant inséré dans une ouverture (3e) du cadre de support (3 ; 203) dans une étape de pré-montage et étant verrouillé au cadre de support (3 ; 203),
- l'unité télématique (1 ; 201) formée du cadre de support (3 ; 203) et du boîtier télématique (2 ; 202) étant utilisée pour le montage depuis l'extérieur dans un évidement (102) de la carrosserie de véhicule (101) qui est adapté au cadre de support (3 ; 203) et étant verrouillée à la carrosserie de véhicule (101),
- le boîtier télématique (2 ; 202) étant déverrouillé du cadre de support (3 ; 203) afin d'être démonté d'un espace intérieur (106 ; 306) de la carrosserie de véhicule (101) et étant retiré du cadre de support (3 ; 203) pour être amené dans l'espace intérieur (106 ; 306).

2. Procédé selon la revendication 1, **caractérisé en ce que** le cadre de support (3 ; 203) de l'unité télématique (1 ; 201) est verrouillé à la carrosserie de véhicule (101) de manière à pouvoir être séparé à nouveau de la carrosserie de véhicule (101), si nécessaire à l'aide d'un outil.

3. Procédé selon l'une au moins des revendications précédentes, **caractérisé en ce que** le démontage du boîtier télématique (2 ; 202) est effectué de manière à ce qu'un verrouillage (6; 206) du boîtier télématique (2 ; 202) au cadre de support (3; 203) est d'abord libéré à la main et sans outils, un vecteur force (KV) d'une force exercée pour le déverrouillage étant orienté parallèlement à un plan défini par la carrosserie de véhicule (101) au niveau de l'évidement (102), le boîtier télématique (2 ; 202) étant déverrouillé notamment par un mouvement de coulissement ou par un mouvement de basculement.

4. Procédé selon la revendication 3, **caractérisé en ce que**, après le déverrouillage, le boîtier télématique (2 ; 202) est d'abord basculé par rapport au cadre de support (3 ; 203) de manière à ce que le boîtier télématique (2 ; 202) reste en appui avec le cadre de support (3 ; 203) pendant le mouvement de basculement à l'aide d'un bord opposé à un moyen de déverrouillage (13) .

5. Unité télématique (1 ; 201) comprenant un boîtier télématique (2 ; 202) destiné à la réception et au raccordement de composants de liaison de communication et de données d'un véhicule (107), **caractérisé en ce que** l'unité télématique (1; 201) comprend le boîtier télématique (2 ; 202) et un cadre de support (3 ; 203), le cadre de support (3 ; 203) comprenant une ouverture (3e), l'unité télématique formée du cadre de support et du boîtier télématique étant adaptée pour être montée de l'extérieur dans un évidement de la carrosserie de véhicule qui est adapté au cadre de support et étant verrouillée à la carrosserie de véhicule, le boîtier télématique (2 ; 202) et le cadre de support (3 ; 203) étant adaptés l'un à l'autre de manière à ce que le boîtier télématique (2 ; 202) soit reçu dans l'ouverture (3e) à l'état monté et verrouillé au cadre de support (3 ; 203) de sorte que le boîtier télématique (2 ; 202) soit porté par le cadre de support (3 ; 203) et puisse être retiré par déverrouillage, le boîtier télématique (2 ; 202) étant approprié pour être démonté d'un espace intérieur (106 ; 306) de la carrosserie de véhicule (101) afin d'être déverrouillé du cadre de support (3; 203) et retiré du cadre de support (3 ; 203) et être amené dans l'espace intérieur (106 ; 306).

6. Unité télématique selon la revendication 5, **caractérisée en ce que** le cadre de support (3 ; 203) est conçu sous la forme d'un cadre de support (3 ; 203) fermé en périphérie.

7. Unité télématique selon la revendication 6, **caractérisée en ce que** le cadre de support (3; 203) comporte au moins deux moyens d'accouplement (7, 8, 9) en direction de son ouverture (3e), **en ce que** le boîtier télématique (2; 202) comprend entre un côté supérieur (2-1) et un côté inférieur (2-2) au moins deux moyens d'accouplement homologues (10, 11, 12), le boîtier télématique (2 ; 202) siégeant à l'état monté dans l'ouverture (3e) du cadre de support (3 ; 203) de manière à ce que les moyens d'accouplement (7, 8, 9) individuels et les moyens d'accouplement homologues (10, 11, 12) individuels forment des paires d'accouplement (K1, K2, K3) permettant de fixer le boîtier télématique (2 ; 202) dans le cadre de support (3 ; 203) de manière imperdable.

8. Unité télématique selon la revendication 6, **caractérisée en ce que** le cadre de support (3; 203) comprend au moins deux moyens de serrage (4, 5) sur un côté extérieur (A3) dirigé à l'opposé de son ouverture (3e), le cadre de support (3 ; 203) étant fixé à l'état monté par complémentarité de formes dans un évidement (102) d'une carrosserie de véhicule (101).

9. Unité télématique selon la revendication 7, **caractérisée en ce que** le boîtier télématique (2 ; 202) comprend au moins un moyen de déverrouillage (13), l'un des moyens d'accouplement (7, 8, 9) ou l'un des moyens d'accouplement homologues (10, 11, 12) pouvant être déplacé par un mouvement linéaire ou un mouvement de pivotement à l'aide du moyen de déverrouillage (13) de manière à libérer une liaison formée par l'une des paires d'accouplement (K1, K2, K3).

10. Unité télématique selon la revendication 9, **caractérisée en ce que** le moyen de déverrouillage (13) est formé par l'un des moyens d'accouplement homologue (10, 11, 12) ou l'un des moyens d'accouplement (7, 8, 9) et **en ce que** le moyen de déverrouillage (13) est conçu en particulier sous la forme d'un levier (14), le levier (14) étant de préférence pivotant sur un axe de pivotement (S).

11. Unité télématique selon la revendication 9, **caractérisée en ce que** le moyen de déverrouillage (13) est conçu sous la forme d'un moyen d'actionnement, notamment un levier (14), qui permet de déplacer le moyen d'accouplement homologue (10, 11, 12) ou le moyen d'accouplement (7, 8, 9) et **en ce que** le moyen d'actionnement peut pivoter notamment sur un axe de pivotement (S).

12. Ensemble (B) d'un véhicule (107), l'ensemble (B) comprenant une carrosserie de véhicule (101) pourvue d'un évidement (102) et d'un boîtier télématique (2 ; 202), **caractérisé en ce que**
- l'ensemble (B) comprend un cadre de support (3 ; 203),
- le cadre de support (3 ; 203) est adapté à l'évidement (102) ménagé dans la carrosserie de véhicule (101) de manière à ce que le cadre de support (3 ; 203) soit reçu dans l'évidement (102) à l'état monté et soit verrouillé à la carrosserie de véhicule (101) de sorte que le cadre de support (3 ; 203) soit porté par la carrosserie de véhicule (101),
- l'unité télématique formée du cadre de support (3 ; 203) et du boîtier télématique (2; 202) est adaptée pour être montée de l'extérieur dans un évidement de la carrosserie de véhicule qui est adapté au cadre de support et être verrouillée à la carrosserie de véhicule,
- le cadre de support (3 ; 203) et le boîtier télématique (2 ; 202) sont adaptés l'un à l'autre de manière à ce que le boîtier télématique (2 ; 202) soit reçu dans une ouverture (3e) du cadre de support (3 ; 203) à l'état monté et verrouillé au cadre de support (3 ; 203) de manière amovible de sorte que le boîtier télématique (2; 202) soit porté par le cadre de support (3 ; 203) et puisse être retiré du cadre de support (3 ; 203) par déverrouillage, et
- le boîtier télématique (2; 202) est approprié pour être démonté d'un espace intérieur (106; 306) de la carrosserie de véhicule (101) afin d'être déverrouillé du cadre de support (3 ; 203) et est retiré du cadre de support (3 ; 203) et amené dans l'espace intérieur (106 ; 306).
